# EUROPÄISCHE PATENTANMELDUNG

(11) **EP 2 327 489 A2**
(43) Veröffentlichungstag der Anmeldung: **01.06.2011**
(21) Anmeldenummer: 10191744.1
(22) Anmeldetag: 18.11.2010
(51) Int. Cl.: B21D 37/20, B21D 28/34

(54) **Monoblock-Stanzwerkzeug**

(30) Priorität: 20.11.2009 DE 102009044616
(71) Anmelder: CIP-Centrum für Innovative-Produktionssysteme GmbH I.G., 44263 Dortmund (DE)
(72) Erfinder: Edler von Graeve, Adolf, 44265 Dortmund (DE)
(74) Vertreter: Rüger, Barthelt & Abel Patentanwälte

(57) **Zusammenfassung**

Das erfindungsgemäße Stanzfolgewerkzeug (1) zeichnet sich dadurch aus, dass sein oberer Werkzeugteil (2) und/oder sein unterer Werkzeugteil (3) zumindest ein Stanzwerkzeug (10) bzw. (15) aufweist, das mehrere Werkzeugstrukturen (20) bzw. Gegenstrukturen (28) aufweist und als Monoblock ausgebildet ist. Die Werkzeugstrukturen (20) bzw. Gegenstrukturen (28) gehören zu unterschiedlichen Arbeitsstufen, die im Takt des Öffnens und Schließens des Standsfolgewerkzeugs (1) von einem Werkstück bzw. Blechteil nacheinander durchlaufen werden.

## Beschreibung

Die Erfindung betrifft ein Stanzfolgewerkzeug und ein Herstellungsverfahren für dieses.

Zur Herstellung von aus Blech oder anderen flächigen Materialien bestehenden Bauteilen dienen häufig Stanzfolgewerkzeuge. Solche Werkzeuge werden z.B. Pressen dazu eingesetzt, durch mehrere Einzelschritte bestimmte Bauteile, wie zum Beispiel Stecker oder dergleichen, herzustellen. Häufig werden die Stanzteile dabei aus einem Blechband hergestellt, dass das Stanzfolgewerkzeug schrittweise durchläuft. Das Stanzfolgewerkzeug enthält mehrere Stanz- und/oder Umformstrukturen, die verschiedene Trenn-, Biege- oder sonstige Umformvorgänge ausführen. Das Blechband wird im Takt der Presse schrittweise weiterbefördert, so dass die noch am Band gehaltenen Teile innerhalb des Werkzeugs von Umformstufe zu Umformstufe weiterbewegt werden.

Der prinzipielle Aufbau eines Stanzwerkzeugs ist aus der DE-PS 10 04 578 erkennbar. Das Werkzeug umfasst ein Oberwerkzeug und ein Unterwerkzeug. Zu dem Unterwerkzeug gehört eine Schnittplatte mit Stanzöffnungen. Zu dem Oberwerkzeug gehört eine Abstreifplatte mit Führungsöffnungen, durch die Schäfte von Stanzstempeln ragen. Die Stanzstempel sind mit ihrem oberen Ende in einer Kopfplatte gehalten.

Ein Stanzfolgewerkzeug ist aus der DE 10 2006 041 494 B3 bekannt. Es umfasst vom Unterwerkzeug aufragende Führungssäulen zur Führung des Oberwerkzeugs und Federmittel, um die Führungsplatte bei schließendem Werkzeug gegen das Unterwerkzeug zu spannen.

Es ist bekannt, zumindest Teile von Stanzwerkzeugen durch elektrochemisches Abtragen (ECM) herzustellen. Zum Beispiel offenbart die GB 988545 die Herstellung eines Stanzstempels, einer Schnittplatte, einer Abstreifplatte oder eines Auswerfersatzes, indem der Stanzstempel und/oder der Auswerfer durch elektrochemisches Senken bearbeitet werden. Mit diesem Verfahren werden zwei zueinander komplementäre Werkzeugteile hergestellt, indem ein Werkzeugteil als Elektrode genutzt und in den Rohling des anderen Werkzeugteils elektrochemisches eingesenkt wird.

Die Standzeit oder Standmenge von Stanzwerkzeugen hängt wesentlich von der Materialbeschaffenheit und der Präzision des Werkzeuges ab. Insbesondere müssen Ober- und Unterwerkzeug präzise zueinander positioniert werden, um Schneidspalte und Schnittbedingungen einzuhalten. Dies gilt in besonderem Maße für Stanzfolgewerkzeuge.

Davon ausgehend ist es Aufgabe der Erfindung, ein Konzept anzugeben, mit dem sich Stanzfolgewerkzeuge besonders präzise ausbilden lassen.

Die Erfindung eignet sich zur kostengünstigen Herstellung von Stanzfolgewerkzeug in hoher Quelität. Das Stanzfolgewerkzeug enthält mehrere Werkzeugstrukturen, die verschiedenen Trenn-, Biege- oder sonstige Umformvorgängen zugeordnet sind. Das Blechband wird im Takt der Presse schrittweise weiterbefördert, so dass die noch am Band gehaltenen Teile innerhalb des Werkzeugs von Umformstufe zu Umformstufe weiterbewegt werden. Es wird erfindungsgemäß ein für die Metall- oder Kunststoffverarbeitung geeignetes Stanzfolgewerkzeug vorgesehen, dessen oberer und dessen unterer Werkzeugteil jeweils mindestens ein als Monoblock ausgebildetes Stanzwerkzeug aufweisen. An diesem Monoblock sind mehrere Werkzeugstrukturen (d.h. Stanz- und/oder Umformstrukturen) bzw. mehrere dazu komplementäre Gegenstrukturen vorgesehen. Der das Stanz-Oberwerkzeug bildende Monoblock weist somit mehrere Werkzeugstrukturen zum Beispiel in Gestalt von Stanzstempeln, Umformstempeln oder Kombinationen davon oder sonstige Strukturen auf, die zu zwei oder mehreren an einem Stanzteil nacheinander auszuführenden Bearbeitungsschritten gehören. An einem einzigen als Monoblock ausgebildeten Stanz-Oberwerkzeug sind somit Werkzeugstrukturen (z.B. Stanz- oder Umformstrukturen) mehrerer Bearbeitungsstufen angeordnet. Entsprechendes gilt für den unteren Werkzeugteil. Dort sind die zu mehreren Umformstufen gehörigen Gegenstrukturen ausgebildet.

Durch die Ausbildung mehrerer Werkzeugstrukturen bzw. Gegenstrukturen an einem einzigen Monoblock wird eine sehr präzise Ausrichtung aufeinanderfolgender Benarbeitungsstufen in Bezug aufeinander erreicht. Die so erzeugten hochpräzisen Stanzfolgewerkzeuge können eine erhöhte Bearbeitungsqualität, eine erhöhte Standmenge oder eine erhöhte Stanzzeit erbringen und lassen sich überdies noch besonders kostengünstig fertigen.

Der Monoblock ist vorzugsweise ein nahtlos aus einheitlichem Material aufgebauter Metallkörper, wie beispielsweise ein Stahlkörper, ein Hartmetallkörper oder dergleichen. Der Monoblock kann jedoch auch aus mehreren dauerhaft miteinander verbundenen Elementen aus gleichen oder unterschiedlichen Metallen oder sonstigen Materialien bestehen, wie beispielsweise einer Grundplatte aus Metall oder Kunststoff, die mit einem oder mehreren Stahlelementen, Hartmetallelementen oder dergleichen fest verbunden ist. Zur festen Verbindung können alle geeigneten mechanischen Verbindungen, wie Lötverbindungen, Schweißverbindungen, Schrumpfverbindungen, Klebeverbindungen oder dergleichen eingesetzt werden.

Aus dem nahtlos einstückig ausgebildeten oder aus mehreren Teilen gebauten Monoblock wird das Stanz-Oberwerkzeug oder das Stanz-Unterwerkzeug vorzugsweise durch elektrochemische Bearbeitung zumindest der Werkzeugstrukturen erzeugt. Vorzugsweise wird hierzu ein elektrochemisches Abtrageverfahren benutzt, wie es als ECM (Electro Chemical Machining) in der Fachwelt bekannt ist. Ein Abkömmling dieses Verfahrens wird als PEM-Verfahren bezeichnet, bei dem zwischen einer die Bearbeitung vornehmenden, als Katode gepolten Elektrode und dem als Anode gepolten Metall-Monoblock ein Elektrolyt angeordnet ist, in dem eine starke Strömung aufrechterhalten wird.

Als Bearbeitungselektrode zur Erzeugung der Werkzeugstrukturen wird vorzugsweise eine mit Ausschnitten versehene dünne Blechmembran eingesetzt, mit der zumindest die Mantelflächen der Werkzeugstrukturen bearbeitet werden. Die Mantelflächen sind dabei parallel zur Bewegungsrichtung des oberen Werkzeugteils orientierte Flächen der Werkzeugstrukturen.

Stirnflächen, d.h. quer zur Bewegungsrichtung des oberen Werkzeugteils liegende Flächen, können ebenfalls im PEM-Verfahren bearbeitet werden. Hierzu werden massive Gegen verwendet.

Die Ausbildung der Werkzeugstrukturen an dem Monoblock führt dazu, dass die den verschiedenen Bearbeitungsstufen zugeordneten verschiedenen Werkzeugstrukturen nicht nur jeweils für sich äußerst präzise ausgebildet sind, sondern dass sich die gleiche hohe Präzision auch auf die Positionierung der aufeinanderfolgenden Werkzeugstufen in Bezug aufeinander erstreckt.

Das erfindungsgemäße Stanzfolgewerkzeug kann sowohl im oberen Werkzeugteil als auch im unteren Werkzeugteil jeweils mehrere Stanz-Oberwerkzeuge bzw. Stanz-Unterwerkzeuge aufweisen, von denen wenigstens eines mehrere Bearbeitungsstufen umfasst. Die verschiedenen Stanz-Oberwerkzeuge sind vorzugsweise in Bearbeitungsdurchlaufrichtung hintereinander angeordnet. Quer zur Bearbeitungsdurchlaufrichtung sind ihre Stirnflächen angeordnet. Vorzugsweise sind die Stirnflächen wenigstens abschnittsweise als Bezugsflächen ausgebildet, die eine präzise Relativpositionierung der verschiedenen Stanz-Oberwerkzeuge untereinander (und Stanz-Unterwerkzeuge untereinander) gestattet. Die Stanz-Oberwerkzeuge liegen mit den Bezugsflächen aneinander an, was eine hohe Relativgenauigkeit der einzelnen Werkzeugstrukturen der Stanz-Oberwerkzeuge zueinander erbringt. Vorzugsweise sind die Stanz-Oberwerkzeuge mit ihren Bezugsflächen gegeneinander gespannt. Entsprechendes gilt für die Stanz-Unterwerkzeuge und deren Werkzeugstrukturen bei Relativpositionierung mehrerer Monoblöcke durch stirnseitige Bezugsflächen.

Die einzelnen Stanz-Oberwerkzeuge sind vorzugsweise an einer Kopfplatte gelagert und stehen mit dieser in Flächenanlage. Die Stanz-Unterwerkzeuge werden vorzugsweise von einer Aufnahmeplatte getragen und stehen mit dieser in Flächenanlage. Dies ergibt einen kompakten Werkzeugaufbau mit guter Kraftübertragung geringer Verwindung und hoher Genauigkeit.

Weitere Einzelheiten vorteilhafter Ausführungsformen der Erfindung gehen aus der Zeichnung, der Beschreibung oder Ansprüchen hervor. Die nachfolgende Beschreibung beschränkt sich auf wesentliche Aspekte der Erfindung und sonstige Gegebenheiten. Die Zeichnung ist ergänzend heranzuziehen. Es zeigen:
Figur 1 ein Stanzfolgewerkzeug erfindungsgemäßer Bauart in schematisierter Seitenansicht,
Figur 2 einen Metall-Monoblock bei der Herstellung eines Stanz-Oberwerkzeug,
Figur 3 einen Ausschnitt eines Details von Figur 2 zur Veranschaulichung einer Ausführungsform,
Figur 4 eine schematische perspektivische Veranschaulichung eines Stanz-Oberwerkzeugs in Kopf stehender Position,
Figur 5 einen gebauten Metall-Monoblock als Rohling zur Herstellung eines Stanz-Oberwerkzeug und
Figur 6 einen weiteren gebauten, vorbearbeiteten Metall-Monoblock als Rohling Herstellung eines Stanz-Oberwerkzeug.

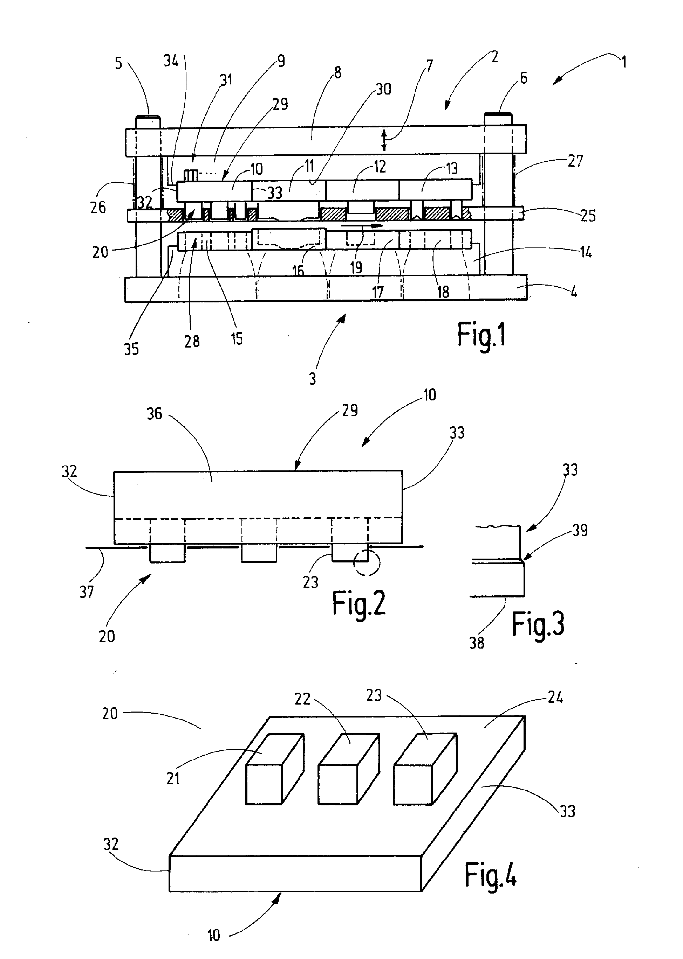

In Figur 1 ist ein Stanzfolgewerkzeug schematisch veranschaulicht, das in einer Presse, beispielsweise Schnellläuferpresse, zur Herstellung von Stanzteilen hergestellt werden kann. Beispielsweise lassen sich mit dem Stanzfolgewerkzeug 1 elektrische Stecker, Klemmen oder sonstige Kleinteile fertigen.

Zu dem Grundaufbau des Stanzfolgewerkzeugs 1 gehören ein oberer Werkzeugteil 2 und eine unterer Werkzeugteil 3. Der untere Werkzeugteil 3 wiest eine Grundplatte 4 auf, von der mehrere Führungssäulen 5, 6 aufragen. An diesen ist in Führungssäulenlängsrichtung 7 beweglich eine obere Platte 8 gelagert. Bei ausreichend präziser Führung der oberen Platte 8 durch anderweitige Mittel können die Führungssäulen 5, 6 optional auch entfallen. Die obere Platte 8 trägt an ihrer Unterseite eine Kopfplatte 9 oder sie ist mit einer solchen einteilig ausgebildet. Die Kopfplatte 9 dient der Positionierung und Aufnahme von Stanz-Oberwerkzeugen 10, 11, 12, 13.

Die Grundplatte 4 trägt eine untere Aufnahmeplatte 14 oder ist mit einer solchen zu einem Bauteil vereinigt. Die untere Aufnahmeplatte 14 trägt Stanz-Unterwerkzeuge 15, 16, 17, 18, die dem Stanz-Oberwerkzeugen 10 bis 13 zugeordnet sind. Die Stanz-Oberwerkzeuge 10 bis 13 und die Stanz-Unterwerkzeuge 15 bis 18 sind jeweils in einer Reihe angeordnet, die sich in Werkstückdurchlaufrichtung 19 erstrecken. Die Werkstückdurchlaufrichtung 19 ist die Richtung, die beim Stanzen und Biegen von Blechteilen beispielsweise von einem Blechband durchlaufen wird.

An den Stanz-Oberwerkzeugen 10 bis 13 sind jeweils Werkzeugstrukturen 20 angeordnet. Figur 4 veranschaulicht solche Werkzeugstrukturen 20 am Beispiel des Stanz-Oberwerkzeugs 10 in Gestalt dreier Stanzstempel 21, 22, 23. Diese gehen nahtlos und einstückig in eine Metallplatte 24 über, die mit dem den Stanzstempeln 21 bis 23 einen einzigen nahtlosen Block bildet.

Optional kann das Stanzfolgewerkzeug 1, wie in Figur 1 dargestellt, weitere Stanz-Oberwerkzeuge 11, 12, 13 aufweisen, für die die vorige Beschreibung des Stanz-Oberwerkzeugs 10 entsprechend gilt.

Die Werkzeugstrukturen 20 des Stanz-Oberwerkzeugs 10 sowie gegebenenfalls der weiteren Stanz-Oberwerkzeuge 11, 12, 13 sind vorzugsweise von einer Abstreifplatte 25 umgeben, die an den Führungssäulen 5, 6 in Führungssäulenlängsrichtung 7 beweglich gelagert ist. Der Abstreifplatte 25 können Federmittel 26, 27, beispielsweise in Gestalt von Tellerfederpaketen, Schraubenfedern oder anderen Federmitteln 26, 27, zugeordnet sein. Diese dienen dazu, die Abstreifplatte 25 beim Schließen des Stanzfolgewerkzeugs 1 nach unten vorzuspannen, um das Werkstück, beispielsweise ein Blechband, sicher auf dem unteren Werkzeugteil 3 zu halten. Die Abstreifplatte 25 weist entsprechende Durchbrüche zur Aufnahme der Werkzeugstrukturen 20 der Stanz-Oberwerkzeuge 10 bis 13 auf.

In den Stanz-Unterwerkzeugen 15 bis 18 sind den Werkzeugstrukturen 20 komplementäre Gegenstrukturen 28 zugeordnet. Hierbei kann es sich zum Beispiel um Stanzöffnungen handeln, die komplementär zu den jeweiligen Stanzstempeln 21 bis 23 sind und in die die Stanzstempel 21 bis 23 unter Ausbildung eines Schneidspalts eintauchen können. Es kann sich bei den Gegenstrukturen 28 auch um anderweitige Formen beispielsweise zum Quetschen oder Biegen von Werkstückabschnitten oder zum sonstigen Umformen derselben handeln. Ebenso können die Werkzeugstrukturen 20 Stanzwerkzeuge oder sonstige Umformwerkzeuge, beispielsweise zum Biegen oder Verformen des Werkstücks sein.

Die einander benachbarten Stanz-Oberwerkzeuge 10 bis 13 weisen, wie Figur 4 veranschaulicht, einen beispielsweise rechteckigen Plattenabschnitt 24 auf. Dieser kann an seiner Oberseite plan ausgebildet sein. Mit seiner so gegebenen Plananlagefläche 29 kann das Stanz-Oberwerkzeug 10 an der unteren vorzugsweise als Planfläche ausgebildeten Druckfläche 30 der Kopfplatte 9 anliegen. In Figur 1 lediglich schematisch veranschaulichte Mittel, wie beispielsweise eine Permanentmagnetspannvorrichtung 31, können dazu dienen, das Stanz-Oberwerkzeug 10 ortsfest an der Kopfplatte 9 zu halten. Entsprechendes gilt für die Stanz-Oberwerkzeuge 11 bis 13 sowie die Stanz-Unterwerkzeuge 15 bis 18 und deren Verhältnis zu der unteren Aufnahmeplatte 14.

Zur Ausrichtung der einzelnen Stanz-Oberwerkzeuge 11 bis 13 in Bezug aufeinander und in Bezug auf die Stanz-Unterwerkzeuge 15 bis 18 können zwischen der Kopfplatte 9 und den Stanz-Oberwerkzeugen 11 bis 13 Formschlussmittel, wie z.B. Passstifte, wirksam sein. Vorzugsweise aber erfolgt die Relativpositionierung der Stanz-Oberwerkzeuge 11 bis 13 jedoch durch Relativpositioniermittel, die direkt zwischen den einzelnen Stanz-Oberwerkzeugen 11 bis 13 wirken. Dazu sind die Stanz-Oberwerkzeuge 11 bis 13 beispielsweise mit ebenen Stirnflächen 32, 33 versehen, die als Bezugsflächen dienen. Die Stirnflächen 32, 33 erstrecken sich vorzugsweise quer zu der Durchlaufrichtung 19. Sie sind beispielsweise als zusammenhängende durchgehende Flächenausgebildet, können aber auch ein- oder mehrfach unterbrochen sein. Die Stirnflächen 32, 33 können präzise geschliffen oder anderweitig präzise bearbeitet sein, beispielsweise im Drahterodierverfahren oder durch elektrochemisches Senken.

Zur präzisen Ausrichtung der Stanz-Oberwerkzeuge 10 bis 13 in Bezug auf die Kopfplatte 9 und somit letztendlich innerhalb des gesamten Werkzeugs kann durch entsprechende Positioniermittel an der Kopfplatte 9 bzw. an dem jeweiligen Stanz-Oberwerkzeug 10 bis 13 erreicht werden. Beispielsweise weist die Kopfplatte 9 an einem Ende einen Vorsprung 34 auf, an dem die Stirnfläche 32 des Stanz-Oberwerkzeugs 10 anliegt. Damit ist das Stanz-Oberwerkzeug 10 bezüglich der Durchlaufrichtung 19 präzise positioniert. Das Stanz-Oberwerkzeug 11 erhält seine präzise Positionierung durch seine Anlage an dem Stanz-Oberwerkzeug 10.

Entsprechend kann die Positionierung der Stanz-Unterwerkzeuge 15 bis 18 durch einen oder mehrere Vorsprünge 35 an der unteren Aufnahmeplatte 14 vorgenommen werden. So wird letztendlich auch die präzise Positionierung der Stanz-Oberwerkzeuge 10 bis 13 relativ zu den Stanz-Unterwerkzeugen 15 bis 18 erreicht.

Zur Herstellung eines Stanz-Oberwerkzeugs oder Stanz-Unterwerkzeugs wird jeweils von einem Monoblock ausgegangen, wie es in Figur 2 am Beispiel des Stanz-Oberwerkzeugs 10 veranschaulicht ist. Der dort in Bearbeitung befindliche Metallmonoblock 36 ist beispielsweise an seinen Stirnflächen 32, 33 bereits präzise bearbeitet, beispielsweise fein geschliffen oder drahterodiert. Die Strinflächen 32, 33 können in der Erodiermaschine dazu genutzt werden, den Monoblock präzise zu positionieren. Der Metall-Monoblock 36 ist beispielsweise ein rechteckiger Hartmetallblock, Stahlblock oder er besteht aus einem anderen vorzugsweise elektrisch leitenden für den Werkzeugbau geeigneten Material. Er kann dort, wo die Werkzeugstrukturen 20 herausgebildet werden sollen, bereits grob vorgearbeitet, beispielsweise geschliffen oder gefräst sein. Der Metall-Monoblock 36 wird dann in einer zum elektrochemischen Bearbeiten geeigneten Einrichtung aufgenommen und dort beispielsweise unter Zuhilfenahme der gegebenenfalls schon fein bearbeiteten Stirnfläche 32 und/oder 33 und/oder unter Zuhilfenahme der ebenfalls gegebenenfalls fein bearbeiteten Plananlagefläche 29 positioniert und gespannt und mit dem positiven Pol einer Stromquelle verbunden. Es wird dann eine Metallmembran 37 bereit gestellt, die Ausschnitte aufweist, deren Konturen den Umrissen der herzustellenden Werkzeugstrukturen 20 entspricht. Diese Metallmembran 37 wird nun mit einem negativen Pol der vorgenannten Stromquelle verbunden. Unter Zuhilfenahme eines Elektrolyten kommt ein Stromfluss zwischen dem Metall-Monoblock 36 und der Metallmembran 37 zustande, der zu einem Materialabtrag und letztendlich zur Herausbildung der Werkzeugstrukturen 20 führt. Es können beispielsweise die in Figur 4 veranschaulichten Stanzstempel 21, 22, 23 erzeugt werden, die jeweils verschiedenen Bearbeitungsstufen des herzustellenden Werkstücks entsprechen können. Sie haben deshalb unterschiedliche Formen. Die in Figur 4 zur Veranschaulichung genutzten Quader sind somit als abstrakte Veranschaulichung der Stanzstempel 21 bis 23 zu verstehen.

Im Wesentlichen haben die Stanzstempel 21 bis 23 in Stempellängsrichtung einen unveränderlichen Querschnitt. Die Stempellängsrichtung stimmt mit der Führungssäulenlängsrichtung 7 überein. Es ist aber auch möglich, durch Variation des zwischen dem Metall-Monoblocks 36 und der Metallmembran 37 fließenden Stroms oder sonstiger Bearbeitungsparameter entlang der Längsrichtung des Stempels 21 bis 23 unterschiedliche Querschnitte zu erzeugen. Figur 3 veranschaulicht dazu ein Detail aus Figur 2 anhand des Stanzstempels 23. Dieser kann in der Nähe seiner Stirnfläche 38 einen etwas größeren Querschnitt aufweisen als in einem Abstand dazu. Dies beispielsweise durch Verändern der Stromstärke einige Zeit nach Beginn der Bearbeitung. Es kann somit an dem Stanzstempel 23 eine wenige Hundertstel oder Zehntel Millimeter große ringsum laufende Stufe 39 erzeugt werden, bei der sich der Querschnitt des Stanzstempels 23 ausgehend von einem ersten an die Stirnfläche 38 anschließenden größeren Querschnitt auf einem geringfügig geringeren Querschnitt ändert. Ähnliche Stufen können an den beiden anderen Stanzstempeln 21, 22 hergestellt werden.

Mit dem geschilderten Verfahren lassen sich problemlos Werkzeugstrukturen an Monoblöcke 36 bearbeiten, deren Plananlagefläche 29 ungefähr 100 mm x 100 mm beträgt oder auch größer ist. Durch Aneinanderreihung mehrerer solcher Metall-Monoblöcke lassen sich, wie Figur 1 zeigt, ohne Einbußen an Genauigkeit sehr lange Stanzfolgewerkzeuge erzeugen.

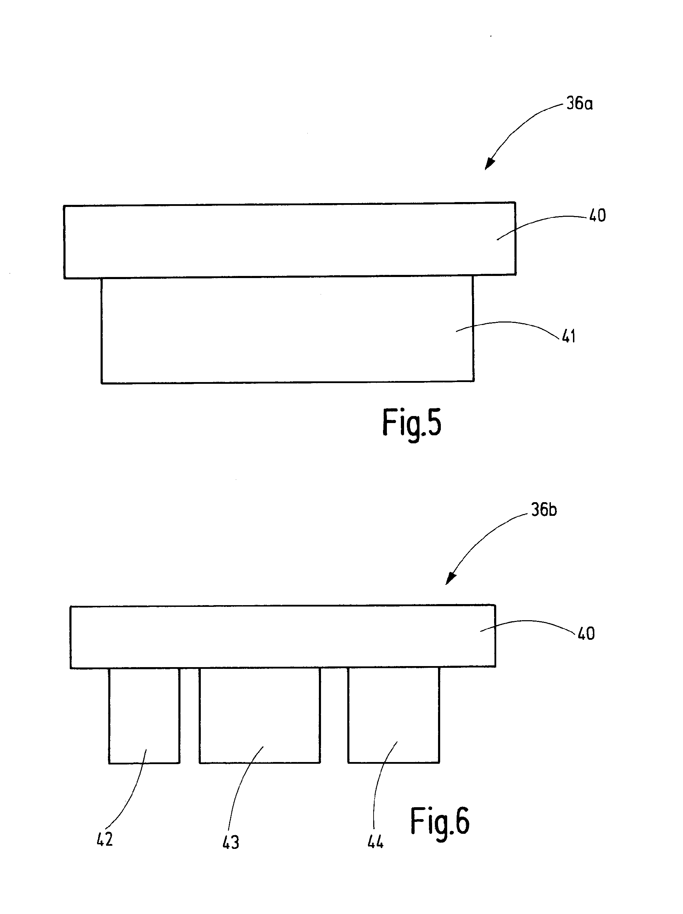

Der Metall-Monoblock 36 kann auch unterschiedlichen Materialien bestehen. Beispielsweise kann er, wie Figur 5 andeutet, aus zwei, zum Beispiel quaderförmigen Teilen 40, 41 bestehen, die flächenhaft miteinander verbunden, beispielsweise verklebt, verschweißt, verlötet oder verschraubt sind. Zum Beispiel besteht der Teil 41 aus einem zur Ausbildung der eigentlichen Werkzeugstrukturen bestgeeigneten Material, wie beispielsweise hochfestem Stahl, während der Teil 40 aus einem anderweitigen Metall, z.B. Stahl, der sich zur Ausbildung des Plattenabschnitts 24 besser eignet. Gegebenenfalls kann der $0 auch aus einem Kunststoff bestehen. Der Monoblock 36a kann wie der Metall-Monoblock 36 zur Herstellung eines der Stanzwerkzeuge 10 bis 13 oder 15 bis 18 herangezogen werden.

Zur Verringerung der durch elektrochemisches Abtragen zu entfernenden Materialmenge kann von einem Materialmonoblock 36b ausgegangen werden, wie er in Figur 6 veranschaulicht ist. Dieser kann nahtlos einstückig aus ein und demselben Material bestehen, indem ein entsprechender Block durch Fräsen, Bohren, Sägen, Schleifen oder sonstige Abtrageverfahren grob vorbearbeitet worden ist, wobei insbesondere seine Teile 42 bis 44 die Konturen der herzustellenden Stanzstempel 21 bis 23 überschreiten. Die Stanzstempel werden wie in Figur 2 erläutert und im Zusammenhang mit ihr beschrieben erzeugt.

Die Teile 42 bis 44 können alternativ auch mit dem Teil 40 über eine Naht, beispielsweise Lötnaht, Schweißnaht, Klebenaht oder anderweitige permanente Verbindungsmittel, wie Schrumpfsitz oder dergleichen verbunden sein. Das Teil 40 ist vorzugsweise bereits feinbearbeitet. Die Herstellung des Stanzwerkzeugs 10 bis 13 oder 15 bis 18 erfolgt wiederum wie im Zusammenhang mit Figur 2 beschrieben.

Das erfindungsgemäße Stanzfolgewerkzeug 1 zeichnet sich dadurch aus, dass sein oberer Werkzeugteil 2 und/oder sein unterer Werkzeugteil 3 zumindest ein Stanzwerkzeug 10 bzw. 15 aufweist, das mehrere Werkzeugstrukturen 20 bzw. Gegenstrukturen 28 aufweist und als Monoblock ausgebildet ist. Die Werkzeugstrukturen 20 bzw. Gegenstrukturen 28 gehören zu unterschiedlichen Arbeitsstufen, die im Takt des Öffnens und Schließens des Standsfolgewerkzeugs 1 von einem Werkstück bzw. Blechteil nacheinander durchlaufen werden.

### Bezugszeichen

- 1: Stanzfolgewerkzeug
- 2: oberer Werkzeugteil
- 3: unterer Werkzeugteil
- 4: Grundplatte
- 5, 6: Führungssäulen
- 7: Führungssäulenlängsrichtung
- 8: obere Platte
- 9: Kopfplatte
- 10-13: Stanz-Oberwerkzeuge
- 14: Aufnahmeplatte
- 15-18: Stanz-Unterwerkzeuge
- 19: Durchlaufrichtung
- 20: Werkzeugstrukturen
- 21-23: Stanzstempel
- 24: Plattenabschnitt
- 25: Abstreifplatte
- 26, 27: Federmittel
- 28: Gegenstruktur
- 29: Plananlagefläche
- 30: Druckfläche
- 31: Permanent-Magnetspannvorrichtung
- 32, 33: Stirnflächen
- 34, 35: Vorsprung
- 36,36a,36b: Metall-Monoblock
- 37: Metallmembrane
- 38: Stirnfläche
- 39: Stufe
- 40-44: Teile

## Patentansprüche

1. Stanzfolgewerkzeug (1)
mit einem oberen Werkzeugteil (2), der mindestens ein als Monoblock ausgebildetes Stanz-Oberwerkzeug (10) mit mehreren Werkzeugstrukturen (20) aufweist, die von einem Werkstück in der Bearbeitungsfolge nacheinander zu durchlaufen sind,
mit einem unteren Werkzeugteil (3), der mindestens einen Stanz-Unterwerkzeug (15) aufweist, das mehrere den Werkzeugstrukturen (20) zugeordnete Gegenstrukturen (28) aufweist.

2. Stanzfolgewerkzeug nach Anspruch 1, **dadurch gekennzeichnet, dass** der Monoblock (36, 36a, 36b) ein nahtlos aus einheitlichem Material aufgebauter Metallkörper ist.

3. Stanzfolgewerkzeug nach Anspruch 1, **dadurch gekennzeichnet, dass** der Monoblock ein aus dauerhaft miteinander verbundenen Elementen (40, 41) verbundener Metallkörper ist, an dem die Werkzeugstrukturen (20) oder Gegenstrukturen (28) nach Herstellung der Verbindung zwischen den (40, 41) Elementen ausgebildet worden sind.

4. Stanzfolgewerkzeug nach Anspruch 1, **dadurch gekennzeichnet, dass** die Werkzeugstrukturen (20) oder Gegenstrukturen (28) durch ein elektrochemisches Abtrageverfahren erzeugt sind.

5. Stanzfolgewerkzeug nach Anspruch 1, **dadurch gekennzeichnet, dass** der obere Werkzeugteil (2) mehrere jeweils als Monoblock ausgebildete Stanz-Oberwerkzeuge (10-13) aufweist.

6. Stanzfolgewerkzeug nach Anspruch 5, **dadurch gekennzeichnet, dass** die Stanz-Oberwerkzeuge (2) jeweils mindestens eine der Längs- oder Querausrichtung dienende Bezugsfläche (33) aufweisen.

7. Stanzfolgewerkzeug nach Anspruch 6, **dadurch gekennzeichnet, dass** die Bezugsflächen (33) Anlageflächen zur gegenseitigen Anlage der Stanz-Oberwerkzeuge (10-13) sind.

8. Stanzfolgewerkzeug nach Anspruch 1, **dadurch gekennzeichnet, dass** der untere Werkzeugteil (3) mehrere jeweils als Monoblock ausgebildete Stanz-Unterwerkzeuge (15-18) aufweist.

9. Stanzfolgewerkzeug nach Anspruch 8, **dadurch gekennzeichnet, dass** die Stanz-Unterwerkzeuge (15-18) jeweils mindestens eine der Längs- oder Querausrichtung dienende Bezugsfläche aufweisen.

10. Stanzfolgewerkzeug nach Anspruch 9, **dadurch gekennzeichnet, dass** die Bezugsflächen Anlageflächen zur gegenseitigen Anlage der Stanz-Unterwerkzeuge sind.

11. Stanzfolgewerkzeug nach Anspruch 1, **dadurch gekennzeichnet, dass** es eine Kopfplatte (9) mit einer Anlagefläche für das Stanz-Oberwerkzeug aufweist.

12. Stanzfolgewerkzeug nach Anspruch 11, **dadurch gekennzeichnet, dass** es Mittel (31) zur Befestigung des mindestens einen oberen Stanz-Oberwerkzeugs (10) an der Kopfplatte (9) versehen ist.

13. Stanzfolgewerkzeug nach Anspruch 12, **dadurch gekennzeichnet, dass** das Mittel (31) ein Magnetspannmittel ist.

14. Verfahren zur Herstellung eines Stanzfolgewerkzeugs mit folgenden Schritten:
Bereitstellen mindestens eines Metall-Monoblocks (36),
Erzeugung mehrerer Werkzeugstrukturen (20) an dem Metall-Monoblock durch elektrochemisches Abtragen,
Einsetzen des bearbeiteten Metall-Monoblocks in einen oberen Werkzeugteil (2)
Bereitstellen eines weiteren Metall-Monoblocks
Erzeugen mehrerer den Umformstrukturen (20) zugeordneter Gegenstrukturen (28) an dem Metall-Monoblock
Einsetzen des Metall-Monoblocks in einen unteren Werkzeugteil (3).

15. Verfahren nach Anspruch 14, **gekennzeichnet durch** das Ausrichten mehrerer aus Metall-Monoblöcken gebildeten Stanz-Oberwerkzeuge (10-13) oder Stanz-Unterwerkzeuge (15-18) mithilfe von an Stirnseiten der Stanz-Oberwerkzeuge (10-13) oder Stanz-Unterwerkzeuge (15-18) ausgebildeter Anlageflächen, die miteinander in Anlage gebracht werden.
